Europäisches Patentamt

European Patent Office

Office européen des brevets

(19)

(11) Publication number: **0 488 350 A2**

## EUROPEAN PATENT APPLICATION

(12)

(21) Application number: **91120488.1**

(22) Date of filing: **29.11.91**

(51) Int. Cl.5: **G05D 13/00**

(30) Priority: **30.11.90 JP 340025/90**

(43) Date of publication of application:
**03.06.92 Bulletin 92/23**

(84) Designated Contracting States:
**DE FR GB IT**

(71) Applicant: **MITA INDUSTRIAL CO. LTD.**
**2-28, Tamatsukuri 1-chome Chuo-ku**
**Osaka-shi Osaka-fu 540(JP)**

(72) Inventor: **Harada, Hiroyuki**
**2-3-36, Shinonomenishimachi**
**Sakai-shi, Osaka-fu, 590(JP)**

(74) Representative: **Bohnenberger, Johannes, Dr.**
**et al**
**Meissner, Bolte & Partner**
**Widenmayerstrasse 48 Postfach 86 06 24**
**W-8000 München 86(DE)**

(54) Method of and device for driving and controlling a motor.

(57) A motor driving control device according to the present invention is one for controlling, for example, a motor (1) for driving an optical system (10) in a copying machine. An encoder (2) is connected to the axis of rotation of the motor (1), and a signal of the encoder (2) is applied to a control circuit (3). The control circuit (3) includes a microcomputer (4), a memory (5) and a driver (6). The microcomputer (4) calculates a rotational speed N and a rotational position $\theta$ of the motor (1) on the basis of pulses applied from the encoder (2). An acceleration A is stored in the memory (5). The microcomputer (4) calculates a command speed $V = \sqrt{2A\theta}$ on the basis of the acceleration A and the calculated rotational position $\theta$, and applies the same to a driver (6). The driver (6) outputs a driving signal proportional to the difference between the rotational speed N of the motor and the command speed V. According to the present invention, when the motor (1) is decelerated or accelerated, the speed can be varied in a short time and smoothly.

FIG.5

## BACKGROUND OF THE INVENTION

### Field of the Invention

The present invention relates generally to a method of and a device for driving and controlling a motor, and more particularly, to a method of and a device for driving and controlling a motor so adapted as to reduce the shock experienced by a motor and/or a load driven by the motor when the motor speed is varied (the motor is initiated, accelerated, decelerated or stopped).

### Description of the Prior Art

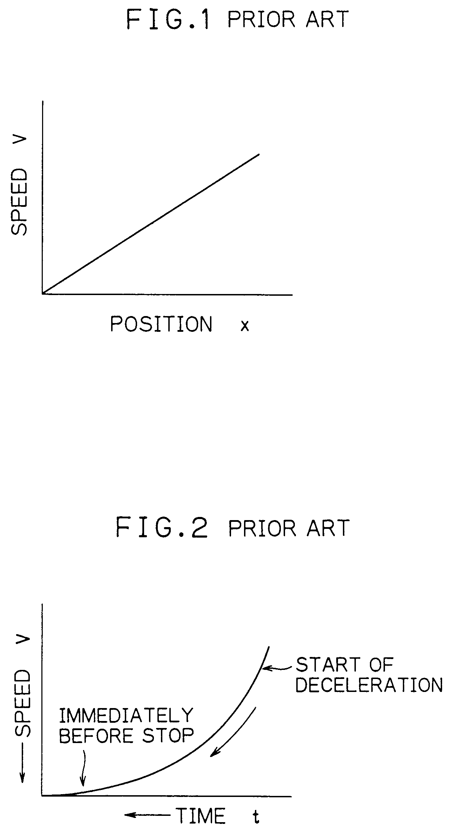

For example, consider a case where such control as to stop a motor rotating at constant speed is carried out in a state where a load is moved at constant speed by the motor. Conventionally, a command speed corresponding to the distance from the present position of the load to a target stop position has been applied to the motor to decelerate the motor and stop the same. That is, such control as to stop a motor has been carried out such that a load reliably stops at a target stop position by representing a command speed V as a linear function of a position x as shown in Fig. 1.

Furthermore, in this deceleration control, the nearer the load gets to the target stop position, the lower the command speed V is. Accordingly, the relation between a motor speed V and a time t is represented by the relation shown in Fig. 2. As obvious from Fig. 2, in such deceleration control, the acceleration of the motor (the slope of a line V-t in Fig. 2) changes during the deceleration. In particular, the acceleration (the slope of the line V-t) reaches its maximum at the time of starting the deceleration, and the acceleration (the slope of the line V-t) reaches its minimum immediately before the stop.

Accordingly, when the motor is decelerated in a short time, the acceleration at the time of starting the deceleration must be very high. On the other hand, when the acceleration at the time of starting the deceleration is low, it takes longer to stop the motor.

Meanwhile, when the motor control device is a control device for, for example, a servomotor for driving an optical system in a copying machine, it is necessary to vary the speed of (initiate, accelerate, decelerate and stop) the motor with the acceleration being constant or being kept at not more than a predetermined value. The reason for this is that the optical system in the copying machine includes members which cannot withstand the shock such as a halogen lamp for illuminating a document and a reflecting mirror and the members which cannot withstand the shock are liable to be, for example, damaged if the acceleration is largely varied.

Consequently, if the servomotor for driving an optical system in a copying machine is controlled by the conventional motor control device, the initial acceleration cannot be too high in varying the speed. Accordingly, the conventional motor control device has the disadvantage in that it takes longer to vary the speed. Particularly it has the disadvantage in that it takes longer to carry out the deceleration control of the servomotor in a state where the optical system is returned. Therefore, it is difficult to increase the processing speed of the copying machine.

## SUMMARY OF THE INVENTION

The present invention has been made to solve the problem of the prior art and has for its object to provide a motor control device capable of efficiently varying the speed in a short time at a constant acceleration.

The present invention provides a control device for varying the rotational speed of a motor, which calculates a command speed V expressed by the following equation to carry out such control that the motor speed reaches the command speed V:

$$V = \sqrt{2A\theta}$$

where A is an acceleration, and B is rotational position data of the motor.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a graph showing the relation between a speed and a position in the conventional speed control;

Fig. 2 is a graph showing the relation between a speed and a time in the conventional speed control;

Fig. 3 is a graph showing the relation between a speed and a time at a constant acceleration;

Fig. 4 is a graph showing the relation between a speed and a position (distance) at a constant acceleration;

Fig. 5 is a block diagram showing the circuit configuration of a motor control device according to one embodiment of the present invention;

Fig. 6 is a flow chart showing a control operation of the motor control device shown in Fig. 5; and

Fig. 7 is an illustration showing a load position detecting mechanism according to another embodiment of the present invention.

DESCRIPTION OF THE PREFERRED EMBODIMENTS

Description is now made of a method of calculating a command speed V. According to the present invention, the rotating state of a motor is detected for each predetermined timing, to calculate rotational speed data and rotational position data $\theta$. The command speed V expressed by the following equation is calculated on the basis of the rotational position data $\theta$ calculated and a predetermined acceleration A stored in storing means or a function of the acceleration A:

$$V = \sqrt{2A\theta}$$

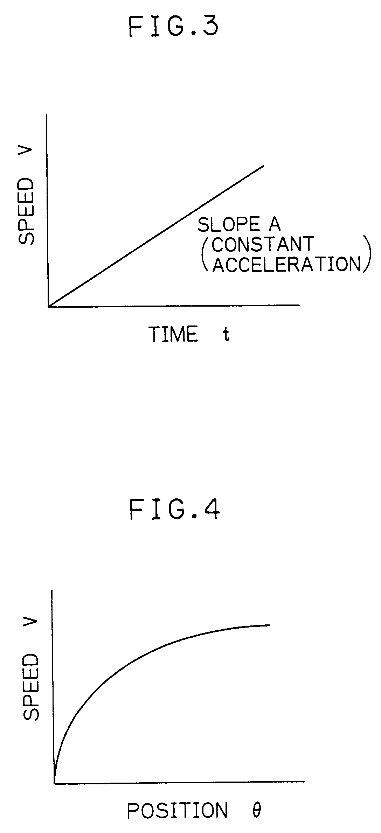

This equation is derived in the following manner. When the acceleration A is made constant, the relation between a speed and a time is as shown in Fig. 3.
Accordingly, the command speed is as follows:

$$V = At \quad (1)$$

Furthermore, the position data $\theta$ is expressed by the following equation because it is obtained by integrating the speed V;

$$\theta = \int V dt \quad (2)$$

The relation is as shown in Fig. 4.
When the equation (1) is substituted in the above described equation (2), the position data $\theta$ is as follows:

$$\theta = \int V dt$$
$$= \int A t dt$$
$$= (A/2) t^2 \quad \ldots \quad (3)$$

When the equation (1) is substituted in the equation (3), the position data $\theta$ is as follows:

$$\theta = (A/2) \cdot (V/A)^2$$
$$= V^2 / (2A)$$

Accordingly, the speed V is as follows:

$$\therefore V = \sqrt{2A\theta}$$

Therefore, the speed V can be expressed by the acceleration A and the position data $\theta$.

Consequently, even if the rotational position data $\theta$ of the motor is changed, a command speed V can be applied to the motor with the acceleration A being constant, thereby to make it possible to vary the motor speed at the constant acceleration A.

Accordingly, no large shock is given to the motor or a load driven by the motor in varying the speed.

Meanwhile, the motor may be controlled by a command speed expressed by the following equation utilizing position data x of the load moved by the motor in place of the rotational position data $\theta$ of the motor in the foregoing description:

$$V = \sqrt{2Ax}$$

Description is now made as one specific embodiment by taking as an example a control circuit of a servomotor for driving an optical system (an illuminating unit and a reflecting mirror) in a copying machine.

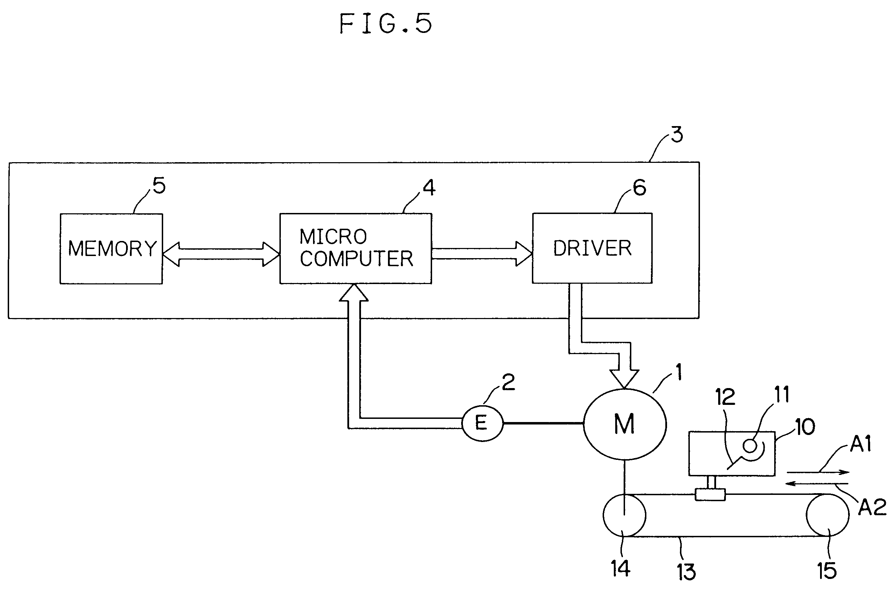

Fig. 5 is a block diagram showing an example of the construction of a motor for driving an optical system 10 in a copying machine and its control circuit. The optical unit 10 is provided with an illuminating lamp 11 and a reflecting mirror 12. This optical unit 10 is fixed to a wire 13, and is moved forward in the direction indicated by an arrow A1 and is returned in the direction indicated by an arrow A2 by the wire 13. The wire 13 is stretched between two pulleys 14 and 15. The pulley 14 is rotated by a DC servomotor 1 to rotate the wire 13.

A rotary encoder 2 serving as means for detecting the rotating state of the DC servomotor 1 for driving an optical system is connected to the axis of rotation of the DC servomotor 1. The rotary encoder 2 outputs pulses every time the DC servomotor 1 is rotated through a predetermined very small angle. B-phase and A-phase pulses, for example, which are equal in period and are 90° out of phase are outputted from the rotary encoder 2 in the present embodiment. Pulses having the respective phases, for example, 200 pulses are outputted by one rotation of the DC servomotor 1.

As the means for detecting the rotating state of the DC servomotor 1, the rotary encoder 2 may be replaced with another equipment for outputting pulses which are periodically synchronized with the rotation of the DC servomotor 1, for example, a frequency generator.

A control circuit 3 includes a microcomputer 4, a memory 5, and a drive circuit 6. The microcomputer 4 calculates rotational speed data of the DC servomotor 1 and rotational position data $\theta$ of the

DC servomotor 1 on the basis of the pulses applied from the rotary encoder 2, and calculates a command speed V on the basis of an acceleration A stored in the memory 5, as described later. The command speed V calculated by the microcomputer 4 is applied to the drive circuit 6. The rotational speed of the DC servomotor 1 is controlled by the drive circuit 6.

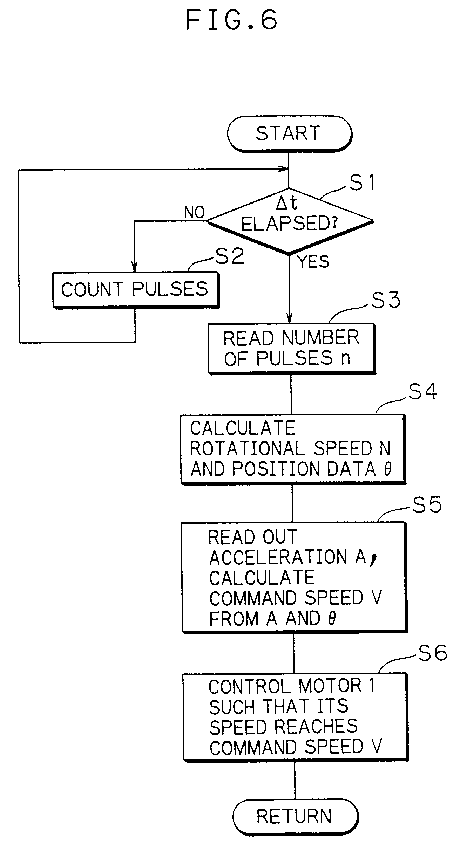

Fig. 6 is a flow chart showing the contents of control of the microcomputer 4 shown in Fig. 5. Referring to Fig. 6, when control is started, the number of pulses applied from the rotary encoder 2 is counted by the microcomputer 4, and the number of pulses n in a predetermined very small time period $\Delta t$ is read in the microcomputer 4 for each time period $\Delta t$ (steps S1, S2 and S3). A rotational speed N of the servomotor 1 is calculated on the basis of the number of pulses n read per very small time period $\Delta t$, and the rotational position data $\theta$ of the motor is calculated (step S4).

Let C [ppr] be the number of pulses, for example, A-phase pulses outputted from the rotary encoder 2 by one rotation of the servomotor 1. In this case, the rotational speed N [rpm] of the servomotor 1 is found by the following equation:

$$N = \frac{n}{\Delta t \times C} \times 60$$

Furthermore, the rotational position data $\theta$ can be found by multiplying an accumulated value of the number of pulses n by a pulse angle.

Meanwhile, in order to calculate the rotational speed N [rpm] more precisely, the calculation may be done using a system disclosed in, for example, United States Patent Application Serial Number 07/550,722 which is a prior application of the present applicant.

A predetermined acceleration A stored in the memory 5 is read out, and a command speed V expressed by the following equation is calculated by the acceleration A read out and the rotational position data $\theta$ calculated (step S5):

$$V = \sqrt{2A\theta}$$

The microcomputer 4 carries out such control that the rotational speed N of the DC servomotor 1 reaches this command speed V. Therefore, a control voltage k (V - N) (where k is a proportional constant) proportional to the difference (V - N) between the actual rotational speed N of the DC servomotor 1 calculated in the step S4 and the above command speed V is applied to the drive circuit 6. Accordingly, control is carried out such that the rotational speed N of the motor 1 reaches the command speed V by the drive circuit 6 (step S6).

The control voltage applied to the drive circuit 6 may be not the voltage k (V - N) proportional to the difference between the command speed V and the rotational speed N but a voltage obtained by adding a control element proportional to the difference between the signal phase of the command speed V and the signal phase of the rotational speed N to the above control voltage k (V - N) proportional to the difference in speed. Such a method of finding a control voltage is disclosed in, for example, the above described prior application of the present applicant.

Output pulses of the rotary encoder 2 are counted for each predetermined very small time period $\Delta t$ and are read in the microcomputer 4. Accordingly, the command speed V is varied (decreased or increased, for example) at the acceleration A under constant conditions as the servomotor 1 is rotated.

Accordingly, in the present embodiment, the speed of the DC servomotor 1 can be varied (the DC servomotor 1 is initiated, accelerated, decelerated or stopped) at a constant acceleration, thereby to make it possible to reduce the shock experienced by the DC servomotor 1 or the optical system 10 in the copying machine which is driven by the motor 1 at the time of varying the speed and to carry out efficient control in a relatively short time.

In the above described embodiment, the acceleration A is stored in the memory 5, and the command speed V is calculated utilizing the acceleration A. However, not an acceleration A itself but a function based on a constant acceleration A (for example, a function (characteristic curve) of the position $\theta$ and the speed V as shown in Fig. 4) may be stored in the memory 5 to calculate the command speed V by applying the rotational position data $\theta$ calculated to this characteristic curve.

Furthermore, a plurality of accelerations A1, A2, A3, ... may be previously stored in the memory 5, and the acceleration used may be changed depending on the contents of control. For example, A1 is taken as an acceleration used at the time of acceleration control, and A2 is taken as an acceleration used at the time of deceleration control.

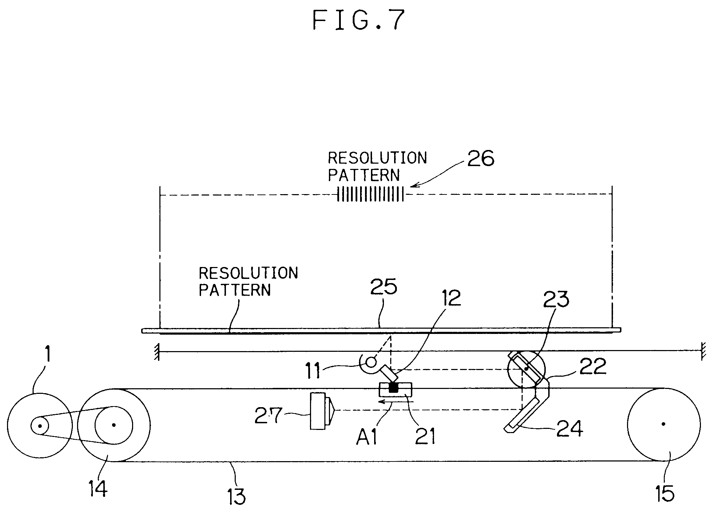

Fig. 7 is an illustration showing the construction of an optical system in a copying machine and the construction of a position data detecting mechanism according to another embodiment of the present invention. The embodiment shown in Fig. 7 describes such construction as to detect position data of a load moved by a motor, that is, an optical system in place of the above described rotational

position data $\theta$ of the motor.

Referring to Fig. 7, the optical system is provided with a first frame 21 comprising an illuminating lamp 11 and a first mirror 12. The first frame 21 is fixed to a wire 13. The first frame 21 is moved forward in a direction indicated by an arrow A1 and is returned in the opposite direction by the wire 13. In addition, the optical system is provided with a second frame 22 moved by the wire 13. The second frame 22 comprises a second mirror 23 and a third mirror 24. Assuming that the first frame 21 is moved in the direction indicated by the arrow A1 at a speed of v, the second frame 22 is moved in the same direction at a speed of v/2, as is known. A document (not shown) mounted on a transparent platen 25 illuminated by the illuminating lamp 11 and a predetermined resolution pattern 26 affixed to, for example, a side part on the lower surface of the transparent platen 25 are introduced into a CCD 26 by the first mirror 12, the second mirror 23 and the third mirror 24. The wire 13 is stretched between two pulleys 14 and 15, and the pulley 14 is rotated by a DC servomotor 1.

The resolution pattern 26 affixed to the side part on the lower surface of the transparent platen 25 is, for example, a pattern of equally spaced black and white stripes, and is affixed to the side part of the transparent platen 25 throughout in the direction of main scanning A1. This resolution pattern 26 may be an arbitrary pattern, for example, a pattern of black and white stripes which differ in thickness, for example, a bar code.

Therefore, if it is judged based on an output of the CCD 26 how many resolution patterns 26 are changed in the direction of main scanning or the direction of return on the basis of the white or black stripes of the resolution pattern detected when the first frame 21 is in a predetermined reference position, the present position of the first frame 21 can be accurately detected.

Thus, position data x of the optical system to be controlled may be detected on the basis of the resolution pattern 26 detected by the CCD 26 in place of the rotary encoder connected to the DC servomotor 1.

If the motor is controlled on the basis of the detected position data x at the following command speed, it is possible to control the return of the optical system in a state where the shock experienced by the optical system is reduced at a constant acceleration, thereby to make it possible to return the optical system in a short time:

$$V = \sqrt{2Ax}$$

Although the present invention has been described and illustrated in detail, it is clearly understood that the same is by way of illustration and example only and is not to be taken by way of limitation, the spirit and scope of the present invention being limited only by the terms of the appended claims.

**Claims**

1. A method for driving and controlling a motor, comprising the steps of:

   detecting the rotational speed of the motor;

   detecting the rotational position of the motor;

   setting a predetermined constant acceleration or a constant function of acceleration;

   calculating a command speed expressed by the following equation on the basis of the detected rotational position of the motor and the set acceleration or function of acceleration:

   $$V = \sqrt{2A\theta}$$

   where V is a command speed, A is an acceleration, and $\theta$ is a rotational position; and

   applying to the motor a driving signal proportional to the difference between the calculated command speed and the detected rotational speed of the motor.

2. A device for driving and controlling a motor(1), comprising:

   rotational speed detecting means (2, 4) for detecting the rotational speed of the motor (1);

   rotational position detecting means (2, 4) for detecting the rotational position of the motor (1);

   storing means (5) for storing a predetermined constant acceleration or a constant function of acceleration;

   command speed calculating means (4) for calculating a command speed V expressed by the following equation on the basis of the rotational position of the motor (1) detected by the rotational position detecting means (2, 4) and the acceleration or the function of acceleration stored in the storing means (5): $V = \sqrt{2A\theta}$ , where V is a command speed, A is an acceleration, and $\theta$ is a rotational position of the motor (1); and

   driving signal output means (6) for finding the difference between the command speed calculated by the command speed calculating means (4) and the rotational speed of the motor (1) detected by the rotational speed detecting means (2, 4) to output a motor driving signal proportional to the difference to the motor (1).

3. A device according to claim 2, characterized in that

the rotational speed detecting means (2, 4) is connected to the axis of rotation of the motor (1), and comprises encoder means (2) for outputting pulses every time the motor (1) is rotated through a very small angle and rotational speed calculating means (4) for detecting the pulses outputted from the encoder means (2) to calculate the rotational speed.

4. A device according to any of claims 2 or 3, characterized in that

the rotational position detecting means (2, 4) accumulates the pulses outputted from the encoder means (2) and detects the rotational position of the motor (1) by the product of its accumulated value and a very small unit angle at which the motor (1) is rotated when one pulse is outputted from the encoder means (2).

5. A device according to any of claims 2 - 4, characterized in that

the driving signal output means (6) outputs as a driving signal a pulse width modulating signal proportional to the difference between the command speed and the rotational speed.

6. A device according to any of claims 2 - 5, characterized in that

the device comprises a device (13, 14, 15) for a motor (1) for driving an optical system (10) in an electrophotographic copying machine.

7. A device for driving and controlling a motor (1) for driving an optical system (11, 12, 22, 23, 24) in an electrophotographic copying machine, comprising:

rotational speed detecting means (2, 4) for detecting the rotational speed of a motor;

load position detecting means (26, 27) for detecting the position of the optical system (11, 12, 22, 23, 24) driven by the motor (1);

storing means (5) for storing a predetermined constant acceleration or a constant function of acceleration;

command speed calculating means (4) for calculating a command speed V expressed by the following equation on the basis of the position of the optical system (11, 12, 22, 23, 24) detected by the load position detecting means (26, 27) and the acceleration or the function of acceleration stored in the storing means (5): V $= \sqrt{2Ax}$ , where V is a command speed, A is an acceleration, and x is a position of the optical system (11, 12, 22, 23, 24); and

driving signal output means (6) for finding the difference between the command speed calculated by the command speed calculating means (4) and the rotational speed of the motor (1) detected by the rotational speed detecting means (2, 4) to output a motor driving signal proportional to the difference to the motor (1).

8. A device according to claim 7, characterized in that

the rotational speed detecting means (2, 4) comprises encoder means (2) connected to the axis of rotation of the motor (1) for outputting pulses every time the motor (1) is rotated through a very small angle, and rotational speed calculating means (4) for detecting the pulses outputted from the encoder means (2) to calculate the rotational speed.

9. A device according to any of claims 6 or 7, characterized in that

the load position detecting means (26, 27) comprises a predetermined position detecting pattern (26) arranged throughout in the direction of movement of the optical system (11, 12, 22, 23, 24) and reading means (27) for reading the position detecting pattern.

10. A device according to claim 9, characterized in that the reading means (27) comprises a CCD being also used as a CCD for reading an image.

FIG.1 PRIOR ART

FIG.2 PRIOR ART

# FIG.3

SPEED V

SLOPE A
$\left(\begin{array}{c}\text{CONSTANT} \\ \text{ACCELERATION}\end{array}\right)$

TIME t

# FIG.4

SPEED V

POSITION θ

# FIG.5

EP 0 488 350 A2

# FIG.6

```
        ┌──────────────┐
        │    START     │
        └──────┬───────┘
               │
    ┌──────────┼──────────┐
    │          ▼          S1
    │        ╱ Δt ╲
    │  NO  ╱ELAPSED?╲
    │◄────╲         ╱
    │      ╲       ╱
    │        ╲  ╱ YES
    │  ┌─────────┐        │
    │  │  COUNT  │ S2     ▼
    │  │ PULSES  │   ┌──────────────┐
    │  └────┬────┘   │ READ NUMBER  │ S3
    │       │        │ OF PULSES n  │
    │       │        └──────┬───────┘
    │       │               │
    └───────┘               ▼
                    ┌──────────────────┐
                    │ CALCULATE        │ S4
                    │ ROTATIONAL SPEED N│
                    │ AND POSITION DATA θ│
                    └────────┬─────────┘
                             ▼
                    ┌──────────────────┐
                    │ READ OUT         │ S5
                    │ ACCELERATION A,  │
                    │ CALCULATE        │
                    │ COMMAND SPEED V  │
                    │ FROM A AND θ     │
                    └────────┬─────────┘
                             ▼
                    ┌──────────────────┐
                    │ CONTROL MOTOR 1  │ S6
                    │ SUCH THAT ITS    │
                    │ SPEED REACHES    │
                    │ COMMAND SPEED V  │
                    └────────┬─────────┘
                             ▼
                    ┌──────────────┐
                    │   RETURN     │
                    └──────────────┘
```

# FIG.7

RESOLUTION PATTERN 26

RESOLUTION PATTERN

EP 0 488 350 A2